# FASCICULE DE BREVET EUROPEEN

(11) **EP 1 646 444 B1**
(45) Date de publication et mention de la délivrance du brevet: **11.09.2013**
(21) Numéro de dépôt: 03817962.8
(22) Date de dépôt: 10.07.2003
(51) Int. Cl.: B01J 8/02, B01D 3/28

(54) **PLATEAU DE DISTRIBUTION D'UNE PHASE GAZEUSE ET D'UNE PHASE LIQUIDE**
VENTILPLATTE ZUM VERTEILEN EINER GASFÖRMIGEN PHASE UND EINER FLÜSSIGEN PHASE
VALVE PLATE FOR DISTRIBUTING A GASEOUS AND LIQUID PHASES

(43) Date de publication de la demande: 19.04.2006
(73) Titulaire: Institut Français du Pétrole, 92852 Rueil Malmaison Cedex (FR)
(72) Inventeur: BOYER, Christophe, F-69390 Charly (FR); COUPARD, Vincent, F-69120 Vaulx en Velin (FR); SVEZIA, Daniel, F-69320 Feyzin (FR)
(86) Numéro de dépôt international: PCT/FR2003/002158
(87) Numéro de publication internationale: WO 2005/014161

(56) Documents cités:
- EP-A- 0 342 918
- WO-A-00/61706
- PATENT ABSTRACTS OF JAPAN vol. 013, no. 119 (C-579), 23 mars 1989 (1989-03-23) & JP 63 291638 A (MITSUBISHI HEAVY IND LTD), 29 novembre 1988 (1988-11-29)

## Description

La présente invention se rapporte à une enceinte, une colonne ou un réacteur comprenant un dispositif de mélange et de distribution d'au moins une phase gazeuse et au moins une phase liquide, ledit dispositif étant placé en amont d'une zone réactionnelle ou de contact gaz/liquide pouvant être composée d'un lit de garnissage ou un lit de particules solides éventuellement catalytiques. La présente invention se rapporte également à un procédé de mise en oeuvre d'une telle enceinte et à un procédé de fabrication d'une telle enceinte.
On connaît de nombreux dispositifs, souvent appelés plateaux distributeurs, dont le but est d'obtenir une distribution sensiblement uniforme d'une phase gaz et d'une phase liquide sur toute la section d'une enceinte le plus souvent de forme cylindrique. Les applications de tels dispositifs sont nombreuses. Par exemple, ces plateaux distributeurs peuvent être placés, dans le sens de circulation des fluides, en amont de zones réactionnelles ou de zones catalytiques dans lesquelles le catalyseur est le plus souvent sous forme de particules solides (billes, extrudés, grains de formes diverses..) disposées en lit fixe ou en lit bouillonnant. On citera à titre d'exemple des applications de tels dispositifs dans les réacteurs d'hydrogénation ou d'hydrotraitement fonctionnant en écoulement ascendant de gaz et de liquide, dans des réacteurs de conversion de résidus de bruts pétroliers lourds ou de charbon en lit fluidisé, triphasique dans lequel la phase solide (suspensions de charbon ou catalyseur) est maintenue en ébullition par le gaz dans du liquide.
Selon d'autres applications, les plateaux distributeurs gaz/liquide peuvent être disposés en amont d'un lit de garnissage structuré, par exemple dans le domaine du lavage par un liquide basique de gaz acides.

Certains de ces dispositifs assurent par ailleurs une fonction de mélange sensiblement homogène des phases gazeuse(s) et liquide(s) sur toute la section de l'enceinte, avant son entrée dans le lit de particules ou de garnissage.

Plus particulièrement, le brevet US 6,123,323 propose un système de distribution utilisable en écoulement ascendant dans un réacteur alimenté par un mélange de liquide et de gaz. Le système est composé de plaques occupant tout ou partie de la section totale du réacteur délimitant un volume dans lequel le gaz et le liquide vont se séparer. Le gaz s'écoule ensuite au travers d'orifices répartis sur la section de la plaque. Le liquide s'écoule lui de façon séparée au travers de tubes traversant la plaque et se prolongeant en dessous de l'interface liquide/gaz ou au travers des fractions de la section du réacteur non couvertes par la plaque. Le système est toujours alimenté en écoulement liquide/gaz. Ainsi le gaz atteint la zone de séparation située à l'amont de la plaque distributrice sous la forme de bulles ou de poches de gaz. Le désengagement du gaz va donc créer des perturbations importantes qui peuvent induire des pulsations de l'écoulement et déséquilibrer localement la distribution du gaz. Le système ne permet pas de plus d'optimiser le contact gaz/liquide puisque le liquide circule séparément du gaz et peut par conséquent traverser le réacteur sans rencontrer celui-ci.

Le brevet US 5,958,220 décrit un distributeur placé dans un réacteur d'hydrotraitement d'un hydrocarbure, alimenté en écoulement ascendant co-courant de gaz et de liquide par un point unique d'introduction des deux fluides préalablement mélangés. Le système est composé d'une plaque couvrant la totalité de la section du réacteur; ladite plaque étant perforée et raccordée à une série de tubes s'étendant vers le bas du réacteur, lesdits tubes assurant la communication de fluide entre l'amont et l'aval de ladite plaque. Cette plaque crée une zone amont dans laquelle le gaz se désengage du liquide. Le gaz désengagé s'écoule ensuite au travers d'orifices situés sur les tubes au-dessus de l'interface de séparation gaz/liquide. Le mélange gaz/liquide ainsi que le gaz présent dans la zone de désengagement s'écoulent au travers des tubes. Le système permet donc au final d'injecter un mélange gaz/liquide sur toute la section du réacteur, en aval du plateau distributeur et en entrée du lit catalytique. Cependant, une telle construction crée nécessairement à l'amont du distributeur gaz/liquide des fluctuations de l'interface, en raison du désengagement inévitable du gaz. Le gaz s'écoulant de manière sensiblement verticale dans le réacteur, les bulles ayant sensiblement la même trajectoire vont coalescer et créer rapidement des poches de gaz qui vont se désengager en provoquant d'importantes fluctuations de l'interface de séparation gaz/liquide. Ces perturbations vont entraîner des pulsations dans l'écoulement du gaz et peuvent déséquilibrer la distribution radiale du gaz en immergeant par le liquide certains des orifices gazeux.

Le brevet WO 00/61706 présente un système de distribution basé sur le même principe que celui décrit dans le brevet US 5958220. Un système de trempe, disposé à l'amont des tubes du distributeur et donc en dessous de l'interface gaz/liquide, est ajouté pour introduire un gaz froid dans le réacteur lorsque que le distributeur est utilisé entre deux zones réactionnelles successives. Ce système peut en outre permettre d'étager le débit d'hydrogène le long du réacteur lorsque celui ci est utilisé comme gaz de trempe. Là encore, le gaz injecté, par coalescence des bulles, va conduire à des oscillations qui peuvent détériorer localement la distribution de l'écoulement gaz/liquide.

La présente invention se rapporte à une enceinte ou un réacteur comprenant au moins un lit de garnissage ou de particules éventuellement catalytiques, des moyens d'introduction d'une phase liquide et des moyens d'introduction d'une phase gazeuse, des moyens de circulation en co-courant ascendant des phases liquide et gazeuse et au moins un système de distribution ou plateau distributeur comprenant
- une plaque plane occupant toute la section de l'enceinte,
- des tubes creux et ouverts à chacune de leurs extrémités, lesdits tubes étant reliés à la plaque plane et perforant celle-ci de façon à permettre la circulation des fluides entre l'amont et l'aval de ladite plaque,
- au moins un orifice disposé sur la paroi latérale de chaque tube,
lesdits moyens d'introduction de la phase liquide étant disposés dans l'enceinte en amont du plateau distributeur et lesdits moyens d'introduction de la phase gazeuse étant disposés dans l'enceinte en dessous de la plaque plane, à un niveau permettant en fonctionnement la formation d'un volume de rétention gaz sous la plaque et la formation d'une interface liquide/gaz située en dessous d'au moins un desdits orifices présents sur chaque tube, en dessous des moyens d'introduction de la phase gazeuse et au dessus de l'extrémité inférieure desdits tubes.

Préférentiellement, le ou les orifices seront disposés sur les tubes à une même ou à de mêmes hauteurs, c'est à dire que chacun des tubes sera percé par construction d'un orifice placé à une hauteur identique et prédéterminé, étant entendu que chaque tube peut être percé dans le sens de sa longueur par une série d'orifice.

Par exemple, ladite enceinte ou ledit réacteur comprend un système de distribution placé en amont du premier lit catalytique.

Avantageusement, ladite enceinte ou ledit réacteur comprend dans ce cas un moyen de répartition de l'écoulement de liquide sur la section de l'enceinte, disposé en amont du système de distribution.

Ladite enceinte ou ledit réacteur peut comprendre en outre un système de distribution placé entre deux lits catalytiques successifs.

De préférence, ladite enceinte ou ledit réacteur peut alors comprendre en outre des moyens de séparation du gaz résiduel issu du premier lit, disposés en amont du système de distribution.

Lesdits moyens de séparation comprennent par exemple une plaque occupant une fraction de la section de l'enceinte et une paroi annulaire perforée fixée sur la périphérie de ladite plaque, ladite paroi délimitant dans l'enceinte un volume central dans lequel sont situés les tubes et un volume périphérique exempt de tubes.

Selon des modes possibles de réalisation de l'invention, les moyens d'introduction de la phase gazeuse comprennent au moins un tube coudé et/ou au moins un tube horizontal perforé.

En général, la densité de tubes dans un plateau distributeur est comprise entre environ 50 tubes/m² et environ 1500 tubes/m².

Le diamètre des tubes est le plus souvent compris entre environ 10 mm et environ 200 mm.

L'invention se rapporte également à un procédé de mélange et de distribution d'un phase liquide et d'une phase gazeuse au sein d'une enceinte ou un réacteur dans lequel on effectue les étapes suivantes :
a) on introduit la phase liquide dans une enceinte en amont d'un plateau distributeur comprenant une plaque plane occupant toute la section transversale de l'enceinte, des tubes creux et ouverts à chacune de leurs extrémités, lesdits tubes étant reliés à la plaque plane et perforant celle-ci de façon à permettre la circulation des fluides entre l'amont et l'aval de ladite plaque et au moins un orifice disposé sur chaque tube,
b) on introduit la phase gazeuse dans l'enceinte au niveau du plateau distributeur,
c) on règle les débits gaz et/ou liquides de manière à établir sous la plaque un volume de rétention gaz dans lequel est introduit la phase gazeuse et une interface liquide/gaz située en dessous d'au moins un desdits orifices et au dessus de l'extrémité inférieure desdits tubes,
d) on introduit le mélange gaz/liquide issu de l'étape c) dans un lit de particules éventuellement catalytiques ou un lit de garnissage.

Avantageusement, le débit de la phase gazeuse est compris entre 5.10⁻⁴ kg/m².s et 10 kg/m².s et le débit de la phase liquide est compris entre 0 et 100 kg/m².s.

Enfin, l'invention se rapporte à un procédé de fabrication d'une enceinte telle que précédemment décrite dans lequel on ajuste le nombre des orifices présents sur les tubes et/ou la disposition des orifices présents sur les tubes et /ou la taille des orifices présents sur les tubes et/ou le diamètre des tubes et/ou la longueur des tubes en fonction des valeurs minimale et maximale du débit de la phase gazeuse et de la phase liquide lors du fonctionnement de ladite enceinte.
Par exemple, l'homme du métier pourra adapter au moins l'une des caractéristiques structurelles qui précède de manière à ajuster selon des principes connus la valeur du volume de rétention gaz et par suite la position de l'interface liquide/gaz.

La présente invention permet notamment d'obtenir à l'entrée du lit de particules ou de garnissage un mélange intime entre gaz et liquide, c'est à dire un milieu composé d'une phase liquide continue dans laquelle est dispersée la phase gazeuse sous forme de bulles de très petit diamètre.

Elle permet en outre une distribution homogène du mélange liquide/gaz sur toute la section de la colonne, en entrée du lit.

De plus, la présente invention permet de résoudre les problèmes de l'art antérieur tels qu'exposés précédemment par un contrôle efficace des fluctuations et de la planéité de l'interface liquide/gaz en amont du plateau distributeur.

Enfin le système proposé autorise une souplesse accrue c'est à dire un fonctionnement sur une large gamme de débit gaz ou de débit liquide. En effet, la répartition de plusieurs orifices le long des tubes permet des variations de débit de gaz de 1 à 3 voire de 1 à 5, dans une gamme de débit liquide comprise entre environ 5.10⁻⁴ kg/m².s et 10 kg/m².s, tout en gardant un fonctionnement homogène même lorsque l'interface gaz/liquide est située à proximité des orifices puisque celle-ci ne fluctue pratiquement pas. De même les diamètres des tubes étant dimensionné pour créer peu de perte de charge de l'écoulement liquide lors de sa traversée du plateau distributeur, le système permet une gamme de fonctionnement très large en débit liquide, le plus souvent comprise entre 0 et 100 kg/m².s, 0 exclu, de préférence entre 0 et 25 kg/m².s, 0 exclu , sans entraîner de variations importantes de la hauteur de rétention gaz.

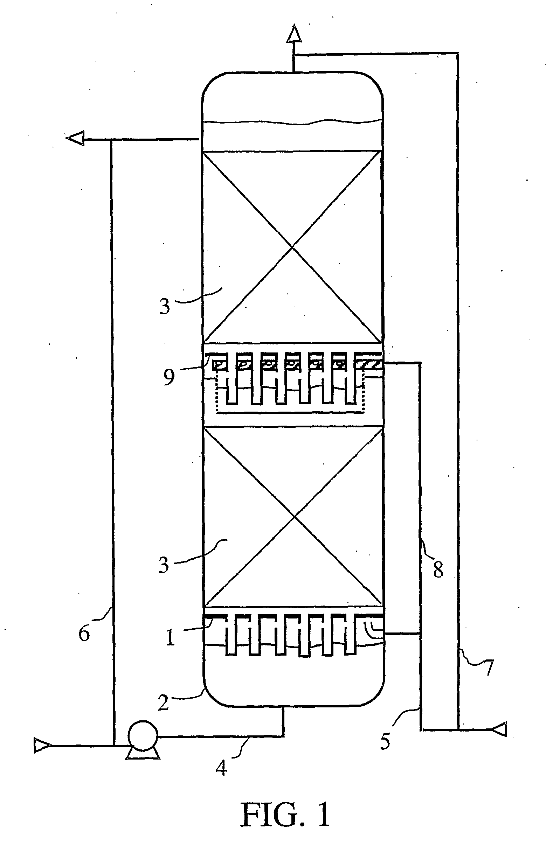

Pour faciliter la compréhension de l'invention, les figures 1 à 3 donnent des exemples de réalisation non limitatif d'un dispositif de mélange et de distribution selon l'invention disposé dans une enceinte ou colonne en amont d'un lit catalytique fixe et fonctionnant en écoulement liquide/gaz co-courant ascendant.

En particulier,
- la figure 1 se rapporte à la description d'une installation globale comprenant un réacteur selon l'invention dans laquelle peut typiquement être mise en oeuvre le présent plateau distributeur, soit en amont d'un premier lit catalytique, soit entre deux lits catalytiques successifs,
- la figure 2 illustre le mode de mise en oeuvre de l'invention dans lequel le plateau distributeur est placé en amont du premier lit c'est à dire au bas du réacteur,
- la figure 3 illustre un autre mode de réalisation dans lequel le plateau distributeur est placé entre deux lits catalytiques successifs au sein du réacteur.

Le système selon la présente invention permet la distribution et le mélange d'un écoulement gaz et liquide dans un réacteur opérant en écoulement ascendant des fluides. La réaction peut nécessiter la présence et la mise en contact d'un mélange gaz/liquide ou d'un mélange gàz/liquide/solide lorsqu'il s'agit d'une réaction catalytique. Dans ce dernier cas, le catalyseur peut être maintenu immobile dans le réacteur ou être maintenu en ébullition par l'écoulement gaz/liquide. Si on se réfère à la figure 1, un système de distribution 1 peut être installé en entrée du réacteur 2 à l'amont d'une zone réactionnelle et/ou entre deux zones réactionnelles 3.

Lorsqu'il est situé en partie basse du réacteur, le système de distribution est alimenté d'une part par une ligne 4 en charge liquide et par une ligne 5 en charge gazeuse. Le liquide circulant dans la ligne 4 peut être de la charge liquide non traitée ou un mélange de charge liquide non traitée et de produit partiellement traité, réinjecté après recycle par la ligne 6. De même la charge gazeuse peut être composée d'un mélange contenant de l'hydrogène pur ou d'un mélange contenant de l'hydrogène pur ainsi que de l'hydrogène résiduel et des hydrocarbures vaporisés récupérés en tête du réacteur et réinjectés en entrée du réacteur par les lignes 7 et 5. Dans tous les cas, l'injection de l'écoulement gaz est totalement séparée de l'injection de l'écoulement liquide au niveau du système de distribution. Lorsque le système de distribution 9 est situé entre deux zones réactionnelles, il est alimenté d'une part par l'écoulement liquide issu de la première zone réactionnelle, éventuellement après séparation du gaz résiduel comme il sera expliqué par la suite, et d'autre part par une injection séparée en charge gazeuse. La charge gazeuse injectée par la ligne 8 peut être un mélange contenant de l'hydrogène pur ou un mélange contenant de l'hydrogène pur, de l'hydrogène résiduel et des hydrocarbures vaporisées récupérés en tête du réacteur et réinjectés dans le réacteur a un niveau intermédiaire par les lignes 7, 5 puis 8.

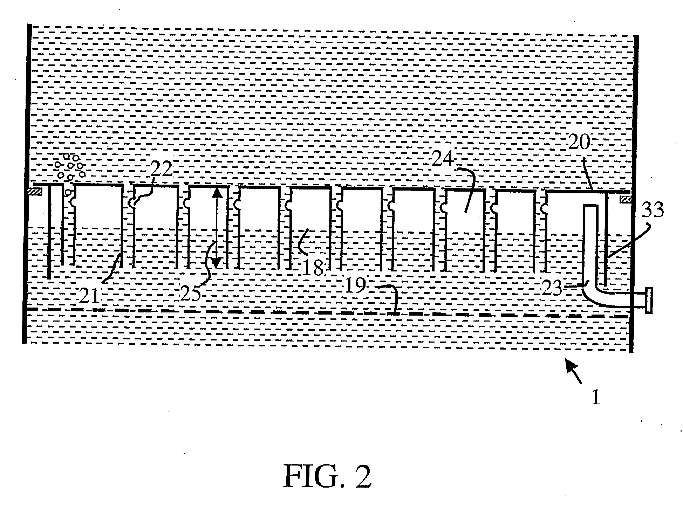

La figure 2 illustre une mise en oeuvre du présent plateau de distribution (ou distributeur) en entrée d'un réacteur et à l'amont d'une première zone réactionnelle. Le distributeur est constitué d'une plaque plane 20 occupant toute la section du réacteur. Cette plaque est reliée à des tubes verticaux 21 qui la perfore et permettent ainsi le passage au travers du plateau de distribution des fluides gazeux et liquide. Le système de distribution est donc composé d'une série de tubes verticaux qui traversent une plaque occupant toute la section du réacteur. Ces tubes possèdent une section de passage latérale qui se présente sous la forme d'un ou plusieurs orifices 22 pouvant être de forme quelconque (circulaire, elliptiques ou toute autre forme). Le nombre, la disposition et la taille des orifices 22 pour chaque tube 21 sera notamment choisi selon toute technique connue par l'homme du métier en fonction de valeurs de fonctionnement minimale et maximale du débit gazeux de telle manière que, quelle que soit la plage de fonctionnement en débit gazeux, la perte de pression subie par le gaz au passage des orifices 22 entraîne la formation d'un volume de rétention gaz 24 sous la plaque 20 et d'une interface liquide/gaz 18 située en dessous d'au moins un des orifices 22, voire en dessous du niveau le plus inférieur des orifices 22. De manière non restrictive, on parlera dans la suite de la description d'orifice ou de section de passage latérale, étant entendu que lesdites sections correspondent à la surface totale de passage du gaz générée par l'ensemble des orifices présents sur une cheminée. Pour éviter l'apparition de fuites de gaz au niveau des fixations du plateau, une paroi circulaire 33, disposée entre la plaque 20 et la paroi latérale du réacteur et se prolongeant au delà de l'extrémité inférieure des tubes creux 21, pourra être avantageusement soudée de façon étanche à ladite plaque 20. La paroi 33 délimite de cette manière la zone centrale du réacteur où sont situées les tubes 21 et évite une possible dépressurisation de la zone de rétention 24 à cause d'éventuelles fuites de gaz.

Lorsqu'il est situé en entrée du réacteur, le distributeur est alimenté séparément par la phase liquide et par la phase gazeuse respectivement par les lignes 5 et 4 (figure 1). La phase liquide est injectée en partie basse du réacteur. De manière avantageuse et notamment dans les cas où un fort débit de liquide est introduit par la ligne 4, une grille 19 (figure 2) est placée en aval du point d'introduction de la charge liquide, de manière à répartir les flux de liquide de manière homogène sur toute la section du réacteur en entrée du distributeur. Bien entendu, tout autre moyen équivalent de répartition de l'écoulement liquide pourra être placé à l'amont du distributeur sans sortir du cadre de l'invention.

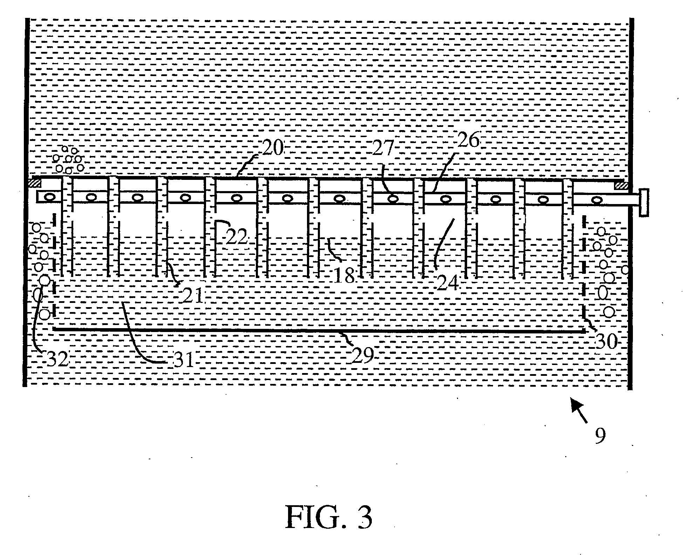

La phase gaz est injectée à travers la paroi latérale du réacteur à l'aide d'un ou plusieurs tubes dont la section de sortie du gaz se situe au-dessus de l'interface liquide/gaz 18 et préférentiellement de l'orifice supérieur de la section de passage latérale des tubes verticaux. Ces tubes peuvent par exemple se présenter sous la forme d'un tube coudé 23, tel que représenté sur la figure 2 ou sous la forme d'un tube horizontal perforé 26 pour répartir le débit de gaz sur une plus grande section, tel que représenté sur la figure 3. Dans le cas où une paroi 33 est installée, le tube 23 débouchera dans le volume central délimité par la paroi 33 et contenant les tubes cheminées 21. Le gaz s'écoule ensuite à travers le ou les orifices 22 situés sur chaque tube vertical 21 et se mélange à l'intérieur de ceux ci à l'écoulement de liquide ascendant. Selon l'invention, l'interface liquide/gaz 18 est toujours située en dessous d'au moins un des orifices 22 et toujours au dessus du niveau le plus bas des tubes. L'injection du gaz et du liquide étant séparée, il n'y a pas de désengagement de bulles de gaz au niveau de l'interface gaz/liquide, contrairement au dispositif décrit dans le brevet US 5,958,220. Ainsi cette interface 18 est maintenue avantageusement quasiment plane et horizontale, ce qui favorise une alimentation en écoulement liquide et en écoulement gaz sensiblement homogène de tous les tubes, en évitant les fluctuations de l'interface 18 dues au désengagement de bulles ou de poches de gaz. Chaque tube 21 joue en outre un rôle de mélangeur gaz/liquide puisque tout l'écoulement liquide se mélange à tout l'écoulement gazeux à l'intérieur des tubes. Avantageusement, le dimensionnement des orifices 22 pour chaque section de passage du liquide et du gaz au niveau des tubes permet de contrôler les vitesses respectives des deux fluides et d'optimiser le cisaillement des jets de gaz par le liquide pour augmenter la surface de contact gaz/liquide. Des internes (de type garnissage structuré, mousse métallique..) peuvent également être insérés pour augmenter l'aire de contact gaz/liquide à l'intérieur des tubes 21. Au final, le système présenté dans cette invention permet d'effectuer simultanément le mélange des écoulements gaz et liquide et de les répartir de façon homogène sur toute la section du réacteur.
Une distribution homogène du mélange impose une densité minimum de tubes. Le nombre de tubes est en général compris entre environ 50 et environ 1500 tubes /m² et préférentiellement entre environ 100 et environ 1000 tubes/m². La densité de tube en généralement choisie en fonction de la densité d'injection du mélange gaz/liquide. Le liquide traverse les tubes verticaux dans le sens de leur axe. Ces tubes verticaux possèdent une ou plusieurs ouvertures ou orifices 22 sur la paroi latérale destinées au passage du gaz. Ces ouvertures latérales peuvent de préférence être des orifices de forme circulaires ou elliptiques ou des fentes rectangulaires. Ainsi que précédemment décrit, la surface totale de chaque section de passage sera en général calculée de façon à ce que la perte de pression subie par le gaz entraîne la formation d'une zone de rétention gaz 24 à l'amont de ces orifices. De cette façon, l'interface gaz/liquide 18 vient s'établir en dessous d'au moins un des orifices 22, empêchant le passage du liquide par lesdits orifices. Le diamètre des tubes et les dimensions des orifices seront calculés de façon à ce que pour les gammes de débits liquide et gaz désirés, l'interface gaz/liquide soit située en dessous du niveau inférieur des section de passages latérales et au dessus de l'entrée des tubes verticaux. Le diamètre des tubes verticaux est le plus souvent calculé pour minimiser la perte de charge du liquide lors de la traversée du plateau distributeur. Ce diamètre est en général compris entre environ 10 et environ 200 mm et de préférence entre environ 20 et environ 100 mm. Le diamètre des orifices ou la largeur des fentes seront en général inférieurs à 75 % du diamètre des tubes. La hauteur de cette rétention gaz est en général comprise entre environ 10 et environ 1000 mm et de préférence entre environ 50 et environ 500 mm. La hauteur totale 25 des tubes 21 sera souvent supérieure d'au moins 80 mm voire 100 mm à la somme de la hauteur maximum du volume de rétention gaz et de la hauteur située entre la plaque 20 et l'orifice supérieur des sections de passage latérales. Cette gamme de hauteur permet généralement un rapport d'au moins 3 entre le débit gaz minimum et le débit gaz maximum à distribuer. De cette façon l'interface liquide/gaz 18 s'établie au-dessus du niveau inférieur des tubes verticaux 21 qui sont de ce fait alimentés exclusivement par le liquide en partie basse. L'injection séparée des fluides gaz et liquide au niveau des tubes verticaux permet de contrôler une alimentation homogène en liquide et en gaz des tubes. De cette façon l'interface gaz/liquide n'est pas perturbée par le désengagement par coalescence des bulles de gaz et se maintient sensiblement horizontale. L'ensemble des orifices 22 est ainsi en permanence alimenté uniquement par le gaz et l'ensemble des tubes 21 est en permanence alimentés uniquement par le liquide. Le gaz va traverser les fentes ou orifices 22 et se mélanger de façon intime au liquide, c'est à dire sous la forme de fines gouttelettes dispersées de façon homogène dans l'écoulement liquide. La vitesse d'injection du gaz sera en générale comprise entre environ 10 cm/s et environ 200 m/s et de préférence comprise entre environ 1 m/s et environ 100 m/s. L'augmentation de la vitesse du jet gazeux favorise la fragmentation des bulles et donc le contact gaz/liquide. Pour augmenter encore le contact gaz/liquide des internes peuvent être insérés dans les tubes verticaux 21. Ces internes peuvent être des garnissages structurés ou des mousses métalliques. Chaque tube joue alors le rôle d'un mélangeur statique. Le système de distribution permet donc simultanément de mélanger et de distribuer l'écoulement gaz et liquide. En effet l'intégralité de l'écoulement liquide est au contact de l'intégralité de l'écoulement gazeux avant de traverser la zone réactionnelle en aval du plateau distributeur.

La figure 3 donne un exemple de mise en oeuvre du plateau distributeur lorsque celui-ci est disposé entre deux zones réactionnelles successives. Le distributeur est constitué d'une plaque plane 20 occupant toute la section du réacteur. Cette plaque est traversée par des tubes verticaux 21 destinés au passage du mélange liquide/gaz. Le liquide traverse les tubes verticaux dans le sens de leur axe. Ces tubes verticaux possèdent une ou plusieurs ouvertures ou orifices 22 sur la paroi latérale destinées au passage du gaz. Ces ouvertures latérales peuvent être des orifices de forme circulaires ou elliptiques ou des fentes rectangulaires. Conformément à la description précédemment faite en relation avec la figure 2, le diamètre des tubes et les sections de passage laissées au gaz sont calculés de façon à ce que, quelque soient les plages de débit liquide et gaz considérées en fonctionnement, l'interface gaz/liquide 18 soit située en dessous d'au moins un des orifices 22 et au dessus de l'entrée des tubes verticaux 21. Les caractéristiques des tubes (nombre, hauteur, diamètre...) sont les mêmes que celles décrites à la figure 2. Du gaz est injecté au niveau du plateau distributeur au travers d'un tube horizontal 26 perforé relié à la conduite 8 (figure 1). Ce gaz peut être un gaz de refroidissement ou un appoint en hydrogène pour la réaction s'effectuant dans la zone réactionnelle située à l'aval du distributeur. Le tube horizontal 26 est situé au dessus de l'interface liquide/gaz 18 et avantageusement situé entre le niveau supérieur de l'orifice supérieur des sections de passages latérales et la plaque 20. Ce tube est percé par des orifices 27 de forme quelconque (par exemple circulaires, elliptiques, rectangulaires) qui sont destinés à répartir le gaz secondaire de façon sensiblement homogène sur toute le volume de rétention gaz 24 et favoriser ainsi le mélange entre le gaz primaire issu de la première zone réactionnelle et le gaz secondaire. Pour éviter que le désengagement du gaz primaire crée des perturbations de l'interface gaz/liquide 18 un système de désengagement du gaz est ajouté. Il est constitué d'une plaque sensiblement plane 29 occupant une fraction de la section du réacteur et d'une paroi annulaire perforée 30 fixée sur la périphérie de la plaque plane 29. La paroi 30 délimite dans le réacteur un volume central 31 dans lequel sont situés tous les tubes verticaux 21 et un volume périphérique 32 dans lequel il n'y a pas de tubes 21. La plaque 29 dévie l'écoulement gaz/liquide issu de la première zone réactionnelle vers la zone périphérique 32. Dans la zone 32 tout le gaz se désengage et rejoint la zone de rétention gaz 24. Le liquide traverse la paroi perforée 30. La taille et le nombre des orifices de la paroi 30 sont en général calculés de façon à ce que le vitesse du liquide au travers de ces orifices soit au moins 10 fois inférieure à la vitesse d'ascension des bulles de gaz. La hauteur de la paroi 30 est calculé selon des techniques classiques de façon que pour les débits gaz et liquide maximum de fonctionnement, le niveau liquide ne soit pas supérieur à l'extrémité supérieure de la paroi 30. De cette façon il n'y pas de risque de débordement liquide au dessus de la paroi 30 et donc par suite pas de risque de perturbations de l'interface gaz/liquide 18.

Les exemples suivant permettent d'illustrer les avantages de la présente invention, sans limiter pour autant et sous aucun aspect son étendue.

### Exemple 1 (selon l'invention):

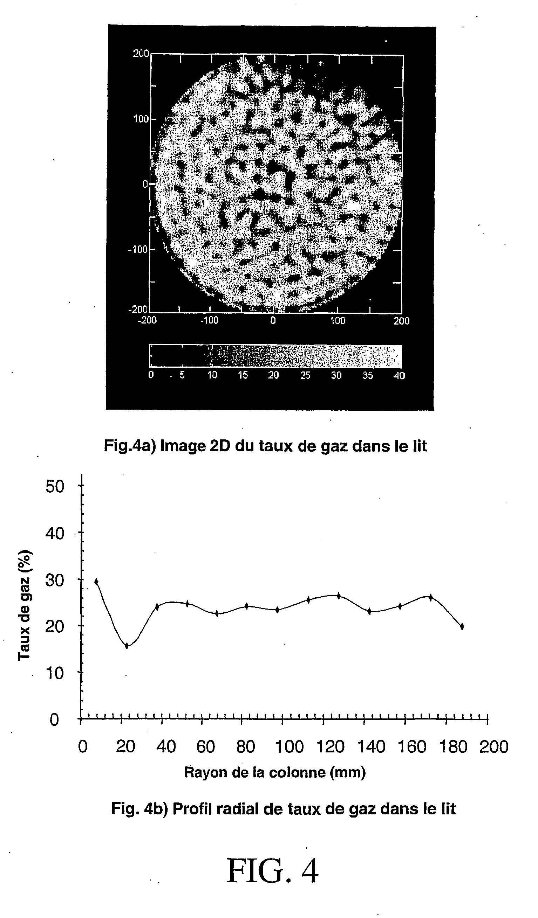

Un système de distribution selon l'invention a été testé en entrée d'une colonne de 400 mm de diamètre en écoulement ascendant de liquide et de gaz selon les principes décrits en relation avec les figures 1 et 2. Le système est placé en amont d'un lit catalytique. La densité des tubes est de 150 tubes/m². Ces tubes ont pour diamètre 15 mm et pour hauteur 400 mm. Un seul orifice 22 circulaire de diamètre 1 mm est situé sur chaque tube à une distance de 10 mm de la plaque 20 pour le passage du gaz. Le flux de liquide introduit par le bas du réacteur est de 3,5 kg/m².s et le flux de gaz est de 0,018 kg/m².s. L'injection du gaz au niveau du distributeur est effectuée à l'aide d'un seul tube débouchant dans la zone de rétention gaz ainsi formé au dessus des orifices 22. Dans ces conditions, des calculs de volume de la zone de rétention 24, basés sur les valeurs de la perte de charge du gaz au niveau des orifices et de la perte de charge du liquide lors de la traversée du plateau, permettent de définir une distance entre la plaque 20 et l'interface liquide/gaz de 303 mm. Deux capteurs du type sonde optique montrent que l'interface liquide /gaz est distante dans ces conditions de la plaque 20 d'une valeur comprise entre 250 mm et 330 mm. Une image de la répartition du taux de gaz est obtenue à l'aide d'un système de tomographie à rayon gamma. Cette image, représentée sur la figure 4a est acquise à 1 m à l'aval de l'entrée du lit. La gamme (en nuances de gris) s'étend du noir pour le taux de gaz nul, c'est à dire pratiquement pas de gaz dans le mélange, au blanc pour un taux de gaz proche de 40 % dans le mélange gaz/liquide. Comme on peut le constater la répartition du taux de gaz est très homogène sur toute la section de la colonne. La figure 4b présente un profil radial du taux de gaz moyenné sur l'ensemble des positions angulaires.

### Exemple 2 (comparatif):

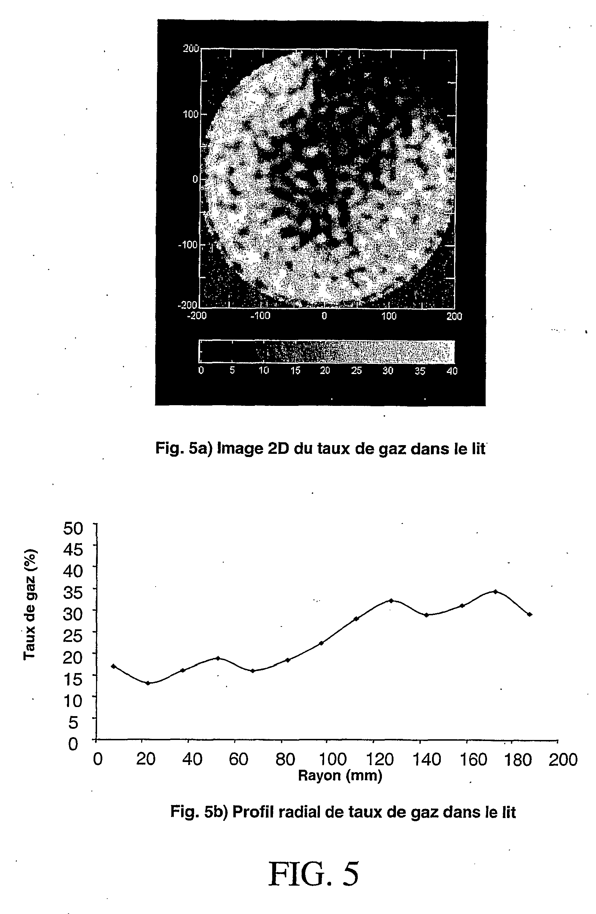

Le dispositif utilisé était le même que celui utilisé à l'exemple précédent. La seule différence concerne l'introduction du débit de gaz qui injecté en amont du plateau dans le sens de circulation des fluides, c'est à dire en mélange avec la phase liquide à l'extrémité inférieure du réacteur. Les conditions opératoires sont les mêmes que celle de l'exemple 1. La figure 5a présente un image de la répartition du taux de gaz obtenu dans ce cas sur toute la section du réacteur. La figure 5b représente le profil radial correspondant du taux de gaz. Comme on peut le constater, une partie importante de la section du lit (environ 50 %) n'est pas irriguée correctement par l'écoulement de gaz. De fait, le profil radial de taux de gaz est beaucoup moins homogène que celui obtenu dans la configuration correspondante à la présente invention.

## Revendications

1. Enceinte ou réacteur (2) comprenant au moins un lit de garnissage ou de particules éventuellement catalytiques (3), des moyens d'introduction d'une phase liquide (4) et des moyens d'introduction d'une phase gazeuse (5), des moyens de circulation en co-courant ascendant des phases liquide et gazeuse et au moins un système de distribution ou plateau distributeur (1, 9) comprenant
- une plaque plane (20) occupant toute la section de l'enceinte,
- des tubes (21) creux, ouverts à chacune de leurs extrémités, lesdits tubes étant reliés à la plaque plane (20) et perforant celle-ci de façon à permettre la circulation des fluides entre l'amont et l'aval de ladite plaque,
- au moins un orifice (22) disposé sur la paroi latérale de chaque tube (21) et sous la plaque plane (20),
lesdits moyens d'introduction de la phase liquide (4) étant disposés dans l'enceinte (2) en amont du plateau distributeur (1, 9) et lesdits moyens d'introduction de la phase gazeuse (5) étant disposés dans l'enceinte (2) en dessous de la plaque plane (20), à un niveau permettant en fonctionnement la formation d'un volume de rétention gaz (24) sous la plaque (20) et la formation d'une interface liquide/gaz (18) située en dessous d'au moins un desdits orifices (22) présents sur chaque tube (21), en dessous des moyens d'introduction de la phase gazeuse (5) et au dessus de l'extrémité inférieure desdits tubes (21).

2. Enceinte ou réacteur selon la revendication 1 comprenant un système de distribution (1) placé en amont du premier lit catalytique.

3. Enceinte ou réacteur selon la revendication 2 comprenant un moyen de répartition (19) de l'écoulement de liquide sur la section de l'enceinte, disposé en amont du système de distribution (1).

4. Enceinte ou réacteur selon l'une des revendications précédentes comprenant en outre un système de distribution (9) placé entre deux lits catalytiques successifs.

5. Enceinte ou réacteur selon la revendication 4 comprenant en outre des moyens de séparation du gaz résiduel issu du premier lit, disposés en amont du système de distribution (9).

6. Enceinte ou réacteur selon la revendication 5 dans lequel lesdits moyens de séparation comprennent une plaque (29) occupant une fraction de la section de l'enceinte et une paroi annulaire perforée (30) fixée sur la périphérie de ladite plaque (29), ladite paroi (30) délimitant dans l'enceinte un volume central (31) dans lequel sont situés les tubes (21) et un volume périphérique (32) exempt de tubes (21).

7. Enceinte ou réacteur selon l'une des revendications précédentes dans lequel les moyens d'introduction de la phase gazeuse comprennent au moins un tube coudé (23) et/ou au moins un tube horizontal perforé (26).

8. Enceinte ou réacteur selon l'une des revendications précédentes dans lequel la densité de tubes dans un plateau distributeur est comprise entre environ 50 tubes/m² et environ 1500 tubes/m².

9. Enceinte ou réacteur selon l'une des revendications précédentes dans lequel le diamètre des tubes (21) est compris entre environ 10 mm et environ 200 mm.

10. Procédé de mélange et de distribution d'une phase liquide et d'une phase gazeuse au sein d'une enceinte ou un réacteur selon l'une des revendications 1 à 9 dans lequel on effectue les étapes suivantes :
a) on introduit la phase liquide dans une enceinte en amont d'un plateau distributeur comprenant une plaque plane occupant toute la section transversale de l'enceinte, des tubes creux et ouverts à chacune de leurs extrémités, lesdits tubes étant reliés à la plaque plane et perforant celle-ci de façon à permettre la circulation des fluides entre l'amont et l'aval de ladite plaque et au moins un orifice disposé sur chaque tube,
b) on introduit la phase gazeuse dans l'enceinte au niveau du plateau distributeur,
c) on règle les débits gaz et/ou liquides de manière à obtenir sous la plaque un volume de rétention gaz, formé par la perte de pression subie par le gaz lors de son passage à travers lesdits orifices, dans lequel est introduit la phase gazeuse et une interface liquide/gaz située en dessous d'au moins un desdits orifices et au dessus de l'extrémité inférieure desdits tubes,
d) on introduit le mélange gaz/liquide issu de l'étape c) dans un lit de particules éventuellement catalytiques ou un lit de garnissage.

11. Procédé selon la revendication 10 dans lequel le débit de la phase gazeuse est compris entre 5.10⁻⁴ kg/m².s et 10 kg/m².s et dans lequel le débit de la phase liquide est compris entre 0 et 100 kg/m².s.

12. Procédé de fabrication d'une enceinte selon l'une des revendications 1 à 9 dans lequel on ajuste le nombre des orifices présents sur les tubes et/ou la disposition des orifices présents sur les tubes et /ou la taille des orifices présents sur les tubes et/ou le diamètre des tubes et/ou la longueur des tubes en fonction des valeurs minimale et maximale du débit de la phase gazeuse et de la phase liquide lors du fonctionnement de ladite enceinte, de façon à obtenir la formation d'un volume de rétention gaz formé par la perte de pression subie par le gaz lors de son passage à travers lesdits orifices.

## Patentansprüche

1. Behälter oder Reaktor (2), umfassend mindestens ein Bett aus Füllkörpern oder gegebenenfalls katalytischen Partikeln (3), Mittel zur Einführung einer flüssigen Phase (4) und Mittel zur Einführung einer gasförmigen Phase (5), Mittel zur Zirkulation in aufsteigender Gleichströmung der flüssigen und gasförmigen Phase und mindestens ein Verteilersystem oder eine Verteilerplatte (1, 9), umfassend:
- eine planare Platte (20), die den gesamten Querschnitt des Behälters einnimmt,
- Hohlrohre (21), die an ihren jeweiligen Enden offen sind, wobei die Rohre mit der planaren Platte (20) verbunden sind und diese durchdringen, um die Zirkulation der Fluide zwischen der stromaufwärtigen und der stromabwärtigen Seite der Platte zu ermöglichen,
- mindestens eine Öffnung (22), die auf der Seitenwand jedes Rohrs (21) und unter der planaren Platte (20) angeordnet ist,
wobei die Mittel zur Einführung der flüssigen Phase (4) in dem Behälter (2) stromaufwärts der Verteilerplatte (1, 9) angeordnet sind und die Mittel zur Einführung der gasförmigen Phase (5) in dem Behälter (2) unterhalb der planaren Platte (20) angeordnet sind, in einer Höhe, die im Betrieb die Bildung eines Gasretentionsvolumens (24) unter der Platte (20) und die Bildung einer Austauschfläche zwischen Flüssigkeit und Gas (18) ermöglicht, die unterhalb mindestens einer der Öffnungen (22), die in jedem Rohr (21) vorhanden sind, unterhalb der Mittel zur Einführung der gasförmigen Phase (5) und über dem unteren Ende der Rohre (21) liegt.

2. Behälter oder Reaktor nach Anspruch 1, umfassend ein Verteilersystem (1), das stromaufwärts des ersten Katalysatorbetts angebracht ist.

3. Behälter oder Reaktor nach Anspruch 2, umfassend ein Mittel zur Verteilung (19) des Flüssigkeitsstroms auf dem Querschnitt des Behälters, das stromaufwärts des Verteilersystems (1) angeordnet ist.

4. Behälter oder Reaktor nach einem der vorhergehenden Ansprüche, ferner umfassend ein Verteilersystem (9), das zwischen zwei aufeinander folgenden Katalysatorbetten platziert ist.

5. Behälter oder Reaktor nach Anspruch 4, ferner umfassend Mittel zur Trennung des aus dem ersten Bett stammenden Restgases, die stromaufwärts des Verteilersystems (9) angeordnet sind.

6. Behälter oder Reaktor nach Anspruch 5, wobei die Mittel zur Trennung eine Platte (29), die einen Teil des Querschnitts des Behälters einnimmt, und eine ringförmige durchdrungene Wand (30), die am Rand der Platte (29) befestigt ist, wobei die Wand (30) in dem Behälter ein zentrales Volumen (31) begrenzt, in dem sich die Rohre (21) befinden, und ein peripheres Volumen (32), das frei von Rohren (21) ist, umfassen.

7. Behälter oder Reaktor nach einem der vorhergehenden Ansprüche, wobei die Mittel zur Einführung der gasförmigen Phase mindestens ein gekrümmtes Rohr (23) und/oder mindestens ein horizontal durchdrungenes Rohr (26) umfassen.

8. Behälter oder Reaktor nach einem der vorhergehenden Ansprüche, wobei die Dichte der Rohre in einer Verteilerplatte im Bereich zwischen etwa 50 Rohren/m² und etwa 1.500 Rohren/m² liegt.

9. Behälter oder Reaktor nach einem der vorhergehenden Ansprüche, wobei der Durchmesser der Rohre (21) im Bereich zwischen etwa 10 mm und etwa 200 mm liegt.

10. Verfahren zum Mischen und zum Verteilen einer flüssigen Phase und einer gasförmigen Phase innerhalb eines Behälters oder eines Reaktors nach einem der Ansprüche 1 bis 9, wobei die folgenden Schritte durchgeführt werden:
a) Einführen der flüssigen Phase in einen Behälter stromaufwärts einer Verteilerplatte, umfassend eine planare Platte, die den gesamten transversalen Querschnitt des Behälters einnimmt, Rohre, die hohl und an ihren jeweiligen Enden offen sind, wobei die Rohre mit der planaren Platte verbunden sind und diese durchdringen, um die Zirkulation der Fluide zwischen der stromaufwärtigen und der stromabwärtigen Seite der Platte zu ermöglichen, und mindestens eine Öffnung, die an jedem Rohr angeordnet ist,
b) Einführen der gasförmigen Phase in den Behälter in Höhe der Verteilerplatte,
c) Einstellen des Gas- und/oder Flüssigkeitsdurchflusses, um unter der Platte ein Gasretentionsvolumen, das durch den Druckverlust gebildet wird, den das Gas während seiner Passage durch die Öffnungen erfährt, in die die gasförmige Phase eingeführt wird und eine Austauschfläche zwischen Flüssigkeit und Gas, die unterhalb mindestens einer der Öffnungen und oberhalb des unteren Endes der Rohre liegt, herzustellen,
d) Einführen des aus Schritt c) stammenden Gas/Flüssigkeitsgemischs in ein Bett aus gegebenenfalls katalytischen Partikeln oder ein Füllkörperbett.

11. Verfahren nach Anspruch 10, wobei der Durchfluss der gasförmigen Phase im Bereich zwischen 5.10⁻⁴ kg/m².s und 10 kg/m².s liegt und wobei der Durchfluss der flüssigen Phase im Bereich zwischen 0 und 100 kg/m².s liegt.

12. Verfahren zur Herstellung eines Behälters nach einem der Ansprüche 1 bis 9, wobei die Anzahl der Öffnungen, die auf den Rohren vorhanden sind und/oder die Anordnung der Öffnungen, die auf den Rohren vorhanden sind und/oder die Größe der Öffnungen, die auf den Rohren vorhanden sind und/oder der Durchmesser der Rohre und/oder die Länge der Rohre in Abhängigkeit von den Minimal- und Maximalwerten des Durchflusses der gasförmigen Phase und der flüssigen Phase während des Betriebs des Behälters angepasst wird, um die Bildung eines Gasretentionsvolumens zu erhalten, das durch den Druckverlust, den das Gas während seiner Passage durch die Öffnungen erfährt, gebildet wird.

## Claims

1. Enclosed space or reactor (2) comprising at least one packing or possibly catalytic particle bed (3), means of introducing a liquid phase (4) and means of introducing a gaseous phase (5), means of circulating the liquid and gaseous phases as ascending co-currents, and at least one distribution system or distributor plate (1, 9) comprising
- a planar plate (20) occupying the entire cross section of the enclosed space,
- hollow tubes (21), open at each of their ends, said tubes being connected to planar plate (20) and piercing the latter so as to make possible the circulation of fluids between the upstream and downstream of said plate,
- at least one orifice (22) located on the lateral wall of each tube (21) and below the planar plate (20),
said means of introducing liquid phase (4) being placed in enclosed space (2) upstream from distributor plate (1, 9) and said means of introducing gaseous phase (5) being placed in enclosed space (2) below planar plate (20), at a level making possible, during operation, the formation of a gas retention space (24) under plate (20) and the formation of a liquid/gas interface (18) located below at least one of said orifices (22) present on each tube (21), below the means of introducing gaseous phase (5) and above the lower end of said tubes (21).

2. Enclosed space or reactor according to claim 1, comprising a distribution system (1) located upstream from the first catalytic bed.

3. Enclosed space or reactor according to claim 2, comprising a means (19) of distributing the liquid flow over the cross section of the enclosed space, placed upstream from distribution system (1).

4. Enclosed space or reactor according to one of the preceding claims, further comprising a distribution system (9) placed between two successive catalytic beds.

5. Enclosed space or reactor according to claim 4, further comprising means of separating the residual gas coming from the first bed, located upstream from distribution system (9).

6. Enclosed space or reactor according to claim 5, in which said separation means comprise a plate (29) occupying a fraction of the cross section of the enclosed space and a perforated, annular wall (30) attached to the periphery of said plate (29), said wall (30) delimiting, in the enclosed space, a central space (31) in which tubes (21) and a peripheral space (32) without tubes (21) are located.

7. Enclosed space or reactor according to one of the preceding claims, in which the means of introducing the gaseous phase comprise at least one elbow tube (23) and/or at least one perforated horizontal tube (26).

8. Enclosed space or reactor according to one of the preceding claims in which the tube density in a distributor plate is between about 50 tubes/m² and about 1500 tubes/m².

9. Enclosed space or reactor according to one of the preceding claims in which the diameter of tubes (21) is between about 10 mm and about 200 mm.

10. Process of mixing and distributing a liquid phase and a gaseous phase within an enclosed space or a reactor according to one of claims 1 to 9 in which the following steps are performed:
a) The liquid phase is introduced into an enclosed space upstream from a distributor plate comprising a planar plate occupying the entire transverse section of the enclosed space, the tubes being hollow and open at each of their ends, said tubes being connected to the planar plate and piercing the latter so as to make possible the circulation of fluids between the upstream and downstream of said plate and at least one orifice placed on each tube,
b) The gaseous phase is introduced into the enclosed space at the level of the distributor plate,
c) The gas and/or liquid throughputs are regulated so as to establish, under the plate, a gas retention space formed by loss of pressure experienced by the gas when it passes through said orifices, into which the gaseous phase is introduced, as well as a liquid/gas interface located below at least one of said orifices and above the lower end of said tubes,
d) The gas/liquid mixture coming from step c) is introduced into a bed of particles, possibly catalytic, or a packing bed.

11. Process according to claim 10, in which the throughput of the gaseous phase is between 5.10⁻⁴kg/m².s and 10 kg/m².s and in which the throughput of the liquid phase is between 0 and 100 kg/m²s.

12. Process of fabricating an enclosed space according to one of claims 1 to 9 in which the number of orifices present on the tubes and/or the arrangement of the orifices present on the tubes and/or the size of the orifices present on the tubes and/or the diameter of the tubes and/or the length of the tubes are adjusted depending on the minimum and maximum values of the throughput of the gaseous phase and of the liquid phase during operation of said enclosed space, so as to form a gas retention space due to loss of pressure experienced by the gas when it passes through sais orifices.
